# EUROPÄISCHE PATENTSCHRIFT

(11) **EP 1 234 623 B1**
(45) Veröffentlichungstag und Bekanntmachung des Hinweises auf die Patenterteilung: **13.07.2005**
(21) Anmeldenummer: 02001657.2
(22) Anmeldetag: 24.01.2002
(51) Int. Cl.: B21H 8/00, B44B 5/00, B21H 7/00, B01J 19/00, F28D 9/00

(54) **Herstellverfahren für mikrostrukturierte Bleche**
Method for manufacturing microstructured sheets
Procédé de fabrication de tôles comprenant des microstructures

(30) Priorität: 22.02.2001 DE 10108469
(43) Veröffentlichungstag der Anmeldung: 28.08.2002
(73) Patentinhaber: Ballard Power Systems AG, 73230 Kirchheim / Teck-Nabern (DE)
(72) Erfinder: Ruck, Joachim, 89520 Heidenheim (DE); Tischler, Alois, 84405 Dorfen (DE); Weisser, Marc, 73277 Owen/Teck (DE)
(74) Vertreter: Beyer, Andreas, Dr.

(56) Entgegenhaltungen:
- WO-A-00/41260
- WO-A-00/64808
- DE-C- 19 801 374
- US-A- 3 150 707
- US-A- 3 325 302

## Beschreibung

Die Erfindung betrifft ein Verfahren zur Herstellung mikrostrukturierter Bleche nach dem Oberbegriff des Anspruchs 1. Ein solches Verfahren ist aus WO-A-00/64808 bekannt.

In DE 198 01 374 A1 werden Verfahren offenbart, die zur Herstellung von mikrostrukturierten Blechen geeignet sind. Dies sind beispielsweise Verfahren wie Ätzen, Fräsen, Prägen, Stanzen oder Drahterodieren.

Bisher werden mikrostrukturierte Bleche durch galvanische (Abtrag oder Aufbau von Material), chemische (Ätzen), elektrische (Erodieren), elektrochemische (ECM-Verfahren), mechanische (HSC-Fräsen, Gravieren) oder Laserabtrag-Verfahren hergestellt. Nachteilig bei allen genannten Verfahren sind die hohen Herstellkosten. Bei den beiden letztgenannten Verfahren ist als Nachteil ein hoher Wärmeeintrag, der zum Verzug der Bleche führt, zu nennen. Bei den galvanischen, chemischen bzw. elektrochemischen Verfahren ist eine aufwendige Entsorgung bzw. ein Recycling der eingesezten Materialien notwendig; außerdem muß am Schluß des jeweiligen Prozesses noch ein weiterer Verfahrensschritt, das Feinwalzen, angehängt werden, um Bleche mit hoher Parallelität zu erhalten, die für den weiteren Fertigungsverlauf benötigt werden. Desweiteren können bei chemischen Verfahren (Ätzen) aus Gründen der Korrosion nicht alle Materialien für Bleche eingesetzt werden. Hochlegierte Cr-Ni-Stähle bzw. Ni-Basis-Legierungen sind nicht für das Ätzen geeignet und es muß daher auf teurere Materialien zurückgegriffen werden.

Aufgabe der Erfindung ist es daher, ein kostengünstiges, für die Massenproduktion geeignetes Verfahren für hohe Stückzahlen zur Verfügung zu stellen, das eine hohe Maßhaltigkeit der Bleche bei nur geringem Wärmeeinfluß während des Prägens aufweist.

Zur Lösung dieser Aufgabe sieht die vorliegende Erfindung ein Verfahren zur Herstellung mikrostrukturierter Bleche mit den Merkmalen des Patentanspruchs 1.

Mit dem erfindungsgemäßen Verfahren ist in besonders vorteilhafter Weise eine sehr gute Oberflächenqualität realisierbar, die den Korrosionsangriff durch aggressive Medien nicht fördert, wie dies beim Ätzen der Fall ist, bei dem die Korngrenzen freiliegen und einem Korrosionsangriff Vorschub leisten. Des weiteren ist das Verfahren sehr umweltfreundlich.

Die weiteren Unteransprüche enthalten vorteilhafte Ausgestaltungen der Erfindung.

Die Erfindung wird nun anhand der beigefügten Zeichnungen weiter beschrieben. In dieser zeigt
- Fig. 1a: in schematischer Weise das Prägen eines Blechs mittels einer strukturierten Prägewalze und
- Fig. 1b: einen Ausschnitt aus Fig. 1a
- Fig. 2a: schematisch eine mögliche Anordnung einer Negativstruktur auf einer Prägewalze, die zum einen die Mikrostruktur und zum anderen die Ausgleichsstrukturen enthält und
- Fig. 2b: einen Ausschnitt aus Fig. 2a

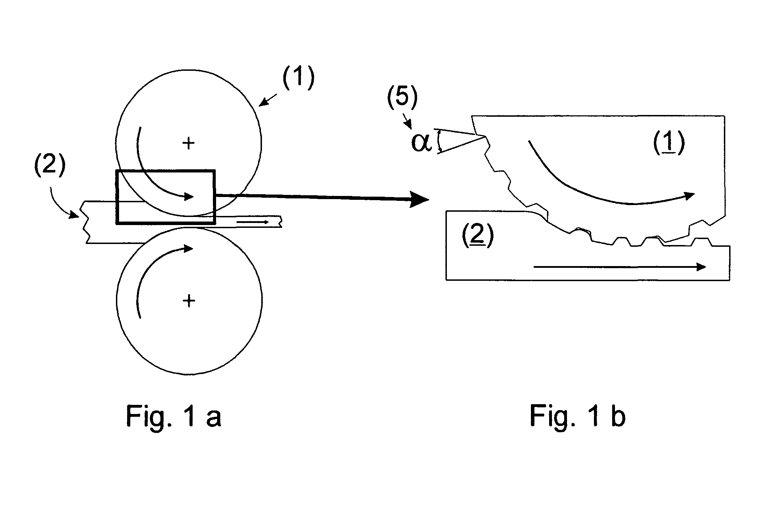

Die Mikrostrukturierung der Bleche erfolgt durch das erfindungsgemäße Verfahren, wobei in einem kontinuierlichen Prägeschritt auf einer Seite Mikrostrukturen in die Blechoberfläche eingebracht werden, während die Oberflächenstruktur der anderen Seite im wesentlichen nicht verändert wird. Der Prägeschritt wird mittels einer Prägewalze (1) durchgeführt, die ein Negativ der einzuprägenden Mikrostruktur (3) aufweist, wobei die Flanken (5) der Mikrostruktur einen Winkel von mindestens 5° gegenüber der Senkrechten bilden und das Negativ in den die Mikrostruktur umgebenden Bereichen Ausgleichsstrukturen (4) zur Vergleichmäßigung der Umformung über den Walzenspalt enthalten. Dies wird in Fig. 1a und Fig. 1b schematisch dargestellt.

Unter Blechen (2) im Sinne der Erfindung versteht man metallische Bauteile, die beispielsweise aus Stahl, insbesondere aus rostfreien Stählen wie z.B. Cr-Ni-Stählen, aus Aluminium, Ni, Ni-Legierungen, Pd, Pd-Legierungen, Cu, Cu-Legierungen sein können.

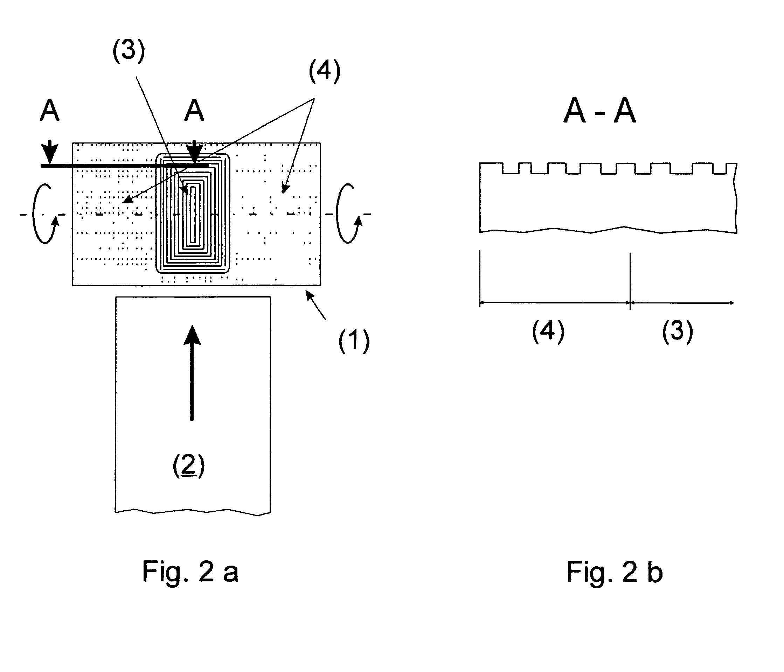

Das Blech (2) kann vor dem Prägen mittels induktiver Heizung oder mittels IR-Strahlern erwärmt werden, wobei die verwendeten Temperaturen im Bereich zwischen Raumtemperatur bis 300°C liegen können und materialabhängig sind. Bei dem anschließenden Prägeschritt, der sogenannten Kaltwalzung bei Raumtemperatur bis 300°C, wird das Material vollständig plastifiziert, d.h. es kommt zu einer Kornzertrümmerung aufgrund der geringen Materialdicke und des starken Umformgrads. Der Walzdruck des Prägeschrittes liegt im Bereich von etwa 30 bis 1000 to, bevorzugt im Bereich von 50 bis 500 to. Während des Prägens erfolgt eine Reduktion des zu prägenden Materials, das sich außerdem im Walzenspalt stark verfestigt. Damit sich das Material beim Durchlaufen durch den Walzenspalt nicht verklemmt, zeigt die Prägung (Mikrostruktur) (3) auf der Walze (1) an den Flanken (5) einen Winkel von mindestens 5° und das Negativ in den die Mikrostruktur umgebenden Bereiche enhält Ausgleichsstrukturen (4), die zu einer Vergleichmäßigung der Umformung über den Walzenspalt bzw. über die Blechbreite führen und damit zu einer gleichmäßigen Voreilung. Mit dieser Maßnahme werden vorteilhafterweise Risse im Blech vermieden und eine gute Planheit gewährleistet, da das Material über die Breite des Walzenspalts gleichmäßig nach vorne fließt. Eine schematische Darstellung ist in Fig. 2a gezeigt. Fig. 2b zeigt einen Schnitt durch die Walze mit gleichmäßiger Anordnung von Mikro- (3) und Ausgleichsstrukturen (4). Die starke Verformung führt jedoch notgedrungen zu Eigenspannungen im Blech. Die Prägewalze (1) selbst kann eine ballige Form aufweisen.

Das Verfahren wird in bezug auf den Prägeschritt kraft- und/oder weggesteuert durchgeführt. Bei kraftgesteuerter Verfahrensführung wird die Walzkraft über einen Kontakt- und Regelmechanismus konstant gehalten, die Walzenspalthöhe in Abhängigkeit von lokalem Umformgrad und Eingangsquerschnitt des Blechs ist variabel einstellbar. Bei weggesteuerter Verfahrensführung wird hingegen die Walzenspalthöhe über einen Kontakt- und Regelmechanismus konstant gehalten, wogegen die Walzkraft in Abhängigkeit von lokalem Umformgrad und Eingangsquerschnitt des Blechs variabel einstellbar ist. Das Verfahren kann auch eine Kombination von kraft- und weggesteuerter Verfahrensführung sein. Während des Prägens kommt es zu einer Kornneubildung (Rekristallisation), die vergleichbar ist mit dem alten Korngefüge. Das Blech wird nach dem Prägeschritt einem Kalibrierschritt unterworfen. Dieser Kalibrierstich dient der Egalisierung des Prägeprofils. Zur Reduktion von Eigenspannungen des mikrostrukturierten Blechs folgt auf den Kalibrierschritt mindestens ein Glühschritt. Die Temperaturen während des Glühprozesses liegen im Bereich von etwa 500 bis 1200°C abhängig von der Art des zu prägenden Materials. Der Glühprozess wird unter Sauerstoffausschluß durchgeführt, bevorzugt in einer wasserstoff- und/oder stickstoffhaltigen Atmosphäre, zur Reduktion oder Verhinderung einer Oxidhautbildung an der Oberfläche des Werkstoffs.

Anschließend wird das mikrostrukturierte Blech nach dem Kalibrier- und/oder Gluhschritt einem Richtprozeß bei Raumtemperatur unterworfen. Das kontinuierliche Verfahren kann zwischen Präge- und Kalibrierschritt entkoppelt werden und die nach dem Prägeschritt anfallenden Verfahrensstufen in einer separaten Anlage kontinuierlich weitergeführt werden.

Die Mikrostrukturen, die nach dem erfindungsgemäßen Verfahren hergestellt werden, weisen eine Tiefe von etwa 0,1 bis 0,5 mm auf, wobei das Blech während des Verfahrens eine Dünnung um etwa 50% erfährt.

Das Verfahren findet Anwendung zur Herstellung eines Mikroreaktors, Mikrowärmeüberträgers, öl-, katalytisch oder Heißgas-beheizten Verdampfers, eines Membranmoduls zur H₂-Abtrennung oder einer Brennstoffzelle, insbesondere einer Polymerelektrolytmembran-Brennstoffzelle, wobei die nach dem erfinderischen Verfahren hergestellten Vorrichtungen sich gleichermaßen für Wasserstoff-, reformatbetriebene oder Direkt-Methanol-Brennstoffzellen eignen.

## Patentansprüche

1. Verfahren zur Herstellung mikrostrukturierter Bleche (2), wobei in einem kontinuierlichen Prägeschritt auf einer Seite des Blechs (2) Mikrostrukturen (3) in die Blechoberfläche eingebracht werden, während die Oberflächenstruktur der anderen Seite im wesentlichen nicht verändert wird, wobei der Prägeschritt mittels einer Prägewalze (1) durchgeführt wird, die ein Negativ der einzuprägenden Mikrostruktur aufweist **dadurch gekennzeichnet, daß** die Flanken (5) der Mikrostruktur (3) einen Winkel von mindestens 5° gegenüber der Senkrechten bilden und das Negativ in den die Mikrostruktur (3) umgebenden Bereichen Ausgleichsstrukturen (4) zur Vergleichmäßigung der Umformung über den Walzenspalt enthält.

2. Verfahren nach Anspruch 1, wobei das Blech (2) vor dem Prägen erwärmt wird.

3. Verfahren nach einem der vorangegangenen Ansprüche, wobei das Verfahren in bezug auf den Prägeschritt kraft- und/oder weggesteuert durchgeführt wird.

4. Verfahren nach Anspruch 1, wobei der Walzdruck des Prägeschrittes in einem Bereich von etwa 30 bis 1000 to liegt.

5. Verfahren nach einem der vorangegangenen Ansprüche, wobei das Blech (2) nach dem Prägeschritt einem Kalibrierschritt unterworfen wird.

6. Verfahren nach Anspruch 5, wobei dem Kalibrierschritt mindestens ein Glühschritt zur Reduktion von Eigenspannungen des mikrostrukturierten Blechs (2) folgt.

7. Verfahren nach Anspruch 6, wobei der Glühprozeß unter Sauerstoffausschluß durchgeführt wird.

8. Verfahren nach Anspruch 5 oder 6, wobei das mikrostrukturierte Blech (2) nach dem Kalibrier- und/oder Glühschritt einer Streckung bei Raumtemperatur unterworfen wird.

9. Verfahren nach Anspruch 1, wobei die Mikrostrukturen (3) bevorzugt eine Tiefe von etwa 0,1 bis 0,5 mm aufweisen.

10. Verfahren nach einem der vorangegangenen Ansprüche, wobei das Blech (2) während des Verfahrens eine Dünnung um etwa 50% erfährt.

11. Verfahren nach einem der vorangegangenen Ansprüche zur Herstellung eines Mikroreaktors, Mikrowärmeüberträgers, öl-, katalytisch oder Heißgas-beheizten Verdampfers, eines Membranmoduls zur H₂-Abtrennung oder einer Brennstoffzelle.

## Claims

1. Method for manufacturing microstructured metal sheets (2), in which, in a continuous stamping step, microstructures (3) are introduced into the sheet-metal surface on one side of the metal sheet (2) while the surface structure of the other side remains substantially unchanged, the stamping step being carried out by means of a stamping roller (1) which incorporates a negative of the microstructure which is to be stamped in, **characterized in that** the flanks (5) of the microstructure (3) form an angle of at least 5° with respect to the perpendicular, and the negative, in the regions surrounding the microstructure (3), includes compensation structures (4) for making the deformation more uniform across the roll nip.

2. Method according to Claim 1, in which the metal sheet (2) is heated prior to the stamping operation.

3. Method according to one of the preceding claims, in which the method is carried out under force and/or displacement control with regard to the stamping step.

4. Method according Claim 1, in which the roller pressure used in the stamping step is in a range from approximately 30 to 1000 t.

5. Method according to one of the preceding claims, in which the metal sheet (2) is subjected to a sizing step following the stamping step.

6. Method according to Claim 5, in which the sizing step is followed by at least one annealing step in order to reduce internal stresses in the microstructured metal sheet (2).

7. Method according to Claim 6, in which the annealing process is carried out under the exclusion of oxygen.

8. Method according to Claim 5 or 6, in which the microstructured metal sheet (2) is subjected to stretching at room temperature following the sizing and/or annealing step.

9. Method according to Claim 1, in which the microstructures (3) preferably have a depth of approximately 0.1 to 0.5 mm.

10. Method according to one of the preceding claims, in which the metal sheet (2) is thinned by approximately 50% during the method.

11. Method according to one of the preceding claims for manufacturing a micro reactor, micro heat exchanger, oil-heated, catalytically heated or hot-gas-heated evaporator, a membrane module for separating off H₂ or a fuel cell.

## Revendications

1. Procédé de fabrication de tôles (2) présentant des microstructures, selon lequel au cours d'une étape d'estampage continue, des microstructures (3) sont formées sur une face de la tôle (2) dans la surface de celle-ci, tandis que la structure de surface de l'autre face n'est sensiblement pas modifiée, et selon lequel l'étape d'estampage est effectuée au moyen d'un cylindre d'estampage (1) qui présente un négatif de la microstructure à estamper, **caractérisé en ce que** les flancs (5) de la microstructure (3) forment un angle d'au moins 5° par rapport à la normale à la face, et le négatif comporte dans les zones entourant la microstructure (3), des structures de compensation (4) pour l'homogénéisation du formage sur l'étendue de l'interstice de laminage.

2. Procédé selon la revendication 1, selon lequel la tôle (2) est échauffée avant l'estampage.

3. Procédé selon l'une des revendications précédentes, selon lequel en ce qui concerne l'étape d'estampage, le procédé est piloté par commande de la force et/ou du déplacement.

4. Procédé selon la revendication 1, selon lequel la pression de laminage de l'étape d'estampage se situe dans un domaine correspondant s'étendant environ de 30 à 1000 t.

5. Procédé selon l'une des revendications précédentes, selon lequel la tôle (2) est soumise, après l'étape d'estampage, à une étape de calibrage.

6. Procédé selon la revendication 5, selon lequel à l'étape de calibrage succède au moins une étape de recuit pour réduire les contraintes internes de la tôle (2) présentant des microstructures.

7. Procédé selon la revendication 6, selon lequel le processus de recuit est effectué en l'absence d'oxygène.

8. Procédé selon la revendication 5 ou 6, selon lequel la tôle (2) présentant des microstructures est soumise après l'étape de calibrage et/ou de recuit, à un étirage à température ambiante.

9. Procédé selon la revendication 1, selon lequel les microstructures (3) présentent de préférence une profondeur d'environ 0,1 à 0,5 mm.

10. Procédé selon l'une des revendications précédentes, selon lequel la tôle (2) subit pendant le déroulement du procédé, un amincissement d'environ 50%.

11. Procédé selon l'une des revendications précédentes, destiné à fabriquer un micro-réacteur, un micro-échangeur de chaleur, un évaporateur chauffé à l'huile, par voie catalytique ou par gaz chaud, un module à membrane pour la séparation de H₂, ou une cellule électrochimique.
